Europäisches Patentamt

European Patent Office

Office européen des brevets

(11) Veröffentlichungsnummer: **0 406 158 A2**

(12) **EUROPÄISCHE PATENTANMELDUNG**

(21) Anmeldenummer: 90810333.6

(22) Anmeldetag: 01.05.90

(51) Int. Cl.5: **G01T 1/16**

(30) Priorität: **30.06.89 CH 2445/89**

(43) Veröffentlichungstag der Anmeldung:
**02.01.91 Patentblatt 91/01**

(84) Benannte Vertragsstaaten:
**BE CH DE ES FR GB LI SE**

(71) Anmelder: **RECYTEC S.A.**
**22, Rue Juste-Olivier**
**CH-1260 Nyon(CH)**

(72) Erfinder: **Hanulik,Jozef**
**Lerchenhalde 45**
**CH-8046 Zürich(CH)**

(74) Vertreter: **Feldmann, Paul David et al**
**c/o Patentanwaltsbüro FELDMANN AG**
**Kanalstrasse 17**
**CH-8152 Glattbrugg(CH)**

(54) Verfahren zur Messung der Radioaktivität von metallischen oder zementhaltigen Gegenständen.

(57) Radioaktiv kontaminierte Gegenstände (10) werden nach einer groben punktuellen Messung (11) einem Fluoroborsäure-Bad (12) zugeführt und hier beispielsweise nach elektrolytischem. Verfahren in eine messbare Geometrie an den Kathodenplatten abgelagert. In der anschliessenden Messung (13) werden die unterhalb eines vorgegebenen Maximalwertes der radioaktiven Strahlung befindlichen Metalle ausgesondert und der Schrottverwertung (14) zugeführt. Die, bei der punktuellen Messung über dieser Grenze liegenden Materialien, werden erst dekontaminiert (17) und dannach in das Säurebad (12) gegeben. Die Fluoroborsäure wird hierbei nicht verbraucht und verbleibt im System. Zur Erzeugung der Fluoroborsäure kann bereits radioaktiv kontaminirte Borsäure aus Druckwasserreaktoren verwendet werden, der lediglich noch Flusssäure zugesetzt und danach destilliert werden muss.

Das erfindungsgemässe Verfahren reduziert die radioaktiven Abfälle (16), reduziert den messtechnischen und administrativen Aufwand für die Freigabe der nicht-radioaktiven Materialien.

FIG. 2

# VERFAHREN ZUR MESSUNG DER RADIOAKTIVITÄT VON METALLISCHEN ODER ZEMENTHALTIGEN GEGENSTÄNDEN

Metallische oder zementhaltige Gegenstände, die sich in radioaktiv kontrollierten Zonen befunden haben, beispielsweise in Kernkraftwerken, Krankenhäuser nuklearen Forschungslabors oder in nach Unfälle oder Katastrophen nuklear verseuchten Gebiete, müssen vor der Entfernung aus diesen Zonen auf ihre radioaktive Strahlungsaktivität gemessen werden. Die entsprechenden, staatlich festgelegten Messvorschriften verlangen neben anderen Kriterien zum Beispiel eine ebene Mindestmessfläche, die nicht kleiner als 100 cm² sein soll. Dabei genügt es nicht, diese Messung lediglich an einer Stelle des Gegenstandes vorzunehmen, sondern muss über die gesamte Fläche erfolgen. Ueblicherweisse sind die hierbei verwendeten Messsonden von einer Grösse von 10 x 10cm oder 10 x 20cm. Die Messzeit pro Sondenfläche beträgt in der Regel zwischen 5 und 15 Sekunden. Jeder gemessene Abschnitt wird auf dem Gegenstand angezeichnet und nummeriert und die Messungen in einem Protokoll festgehalten. Es ist leicht ersichtlich, dass für ein derartiges Verfahren zwei Mann zirka 15 bis 20 Minuten beschäftigt sind um 1 m² auszumessen.

Hinzu kommt, dass viele Gegenstände eine derart komplexe Form haben, wie beispielsweise Möbel, Röhren in verschiedensten Durchmessern, Geräte und Schaltschränke, dass sie mit den geltenden Messvorschriften überhaupt nicht messbar sind. Solche Gegenstände wurden unabhängig von ihren Strahlungsaktivität regelmässig als nuklear verseucht angesehen und entsprechend entsorgt. Bei einer Dekontamination, unabhängig des Kontaminationsgrades mussten diese Gegenstände entsorgt werden, weil auch nach einer Freidekontamination die Geometrie unmessbar blieb und die Dekontamination somit sinnlos gewesen wäre. Jene Gegenstände, die nach den Verfahren gemäss dem Stande der Technik gemessen werden konnten und eine flächenspezifische Kontamination aufweisen, die oberhalb der Freigrenze lag wurden dekontaminiert. Die Dekontamination erfolgte zum Beispiel durch ein bekanntes elektro-chemisches Verfahren, bei dem die Gegenstände in ein Phosphorsäure-Bad gelegt wurden und auf elektrolytischem Wege ungefähr 10 bis einige 100 Mikrometer abgelöst wurden. Danach wurde die Messung wiederholt und falls die Gegenstände eine Radioaktivität unter der Freigrenze aufwiesen als Schrott der Wiederverwendung zugeführt.Der verbleibende Elekrolyt war kontaminiert und musste entsorgt, beziehungsweise äusserst aufwendig regeneriert werden.

Die Bedingungen für die Freimessung ist in den verschiedenen Staaten sehr unterschiedlich geregelt. Für die Kernkraftwerke in der Schweiz sind die Hauptabteilung für Sicherheit der Kernanlagen (HSK) und für den Medizinalbereich das Bundesamt für Gesundheit zuständig. Bei der Freigabe von radioaktivem Material werden drei verschiedene Arten der Messung durchgeführt. In der Schweiz gelten dabei die nachfolgenden Grenzwerte:

a) die Oberflächenkontamination der $\alpha$-Strahler$<1 \cdot 10^{-5}$Ci/cm²
sonstige Nuklide$<1 \cdot 10^{-4}$Ci/cm²
b) die spezifische Aktivität der $\beta,\gamma$-Strahler $< 20$nCi/g
der $\alpha$-Strahler $< 20$pCi/g
c) die Dosisleistung (netto) im HSK-Bereich $< 10\mu$R/h
im SUVA-Bereich $< 50\mu$R/h

Als eine weitere Bedingung muss ferner nachgewiesen werden, dass auch unter ungünstigen Bedingungen bei der vor gesehenen Beseitigungs- oder Verwendungsart keine unzulässigen Bestrahlungen von nichtberuflich strahlenexponierten Personen auftreten können.

Für die Bundesrepublik Deutschland hingegen gelten folgende auszugsweise wiedergegebenen Freigabekriterien :
a) für Abfälle:
$<10^{-4}$faches der Freigrenze je Gramm (z.B. für Co-60: 3,7 Bq/g)
nach Anlage IV, Tab.IV, Sp. 4 in Verb. mit §4 Abs. 4 Nr. 2e StrlSch V
b) für Abfälle und wiederverwertbare Reststoffe:
$<0,37$ Bq/cm² für sonstige radioaktive Stoffe ($\beta$-, $\gamma$-Strahler)
0,037 Bq/cm² für $\alpha$-Strahler
nach Anlage IX StrlSch V
c) für Abfälle und wiederverwertbare Reststoffe: aufgrund des Strahlenminimierungsgebots §28 StrlSch V $<10^{-5}$faches der Freigrenze je Gramm

Es ist die Aufgabe der vorliegenden Erfindung, ein Verfahren zur Messung der Radioaktivität von metallischen oder zementhaltigen Gegenständen zu schaffen, das weniger zeitaufwendig, die Messung von Gegenständen beliebiger Form zulässt, die Menge der radioaktiv zu entsorgenden Materialien reduziert und die Rezyklierung erleichtert. Diese Aufgabe löst ein Verfahren gemäss Patentanspruch 1.

Ein weiterer Vorteil dieses Verfahrens besteht darin, dass kontaminierte Borsäure aus Druckwasserreaktoren zur Gewinnung des erforderlichen Elektrolytes verwendet werden kann.

In der anliegenden Zeichnung sind zwei Diagramme dargestellt. Es zeigt:

Figur 1 eine schematische Darstellung des Messverfahrens nach dem Stand der Technik und;

Figur 2 das Ablaufschema des erfindungsgemässen Messverfahrens.

Figur 3 die schematische Darstellung chemischen Umformung der Geometrie

Figur 4 die schematische Darstellung einer elektrochemischen Umformung der Geometrie;

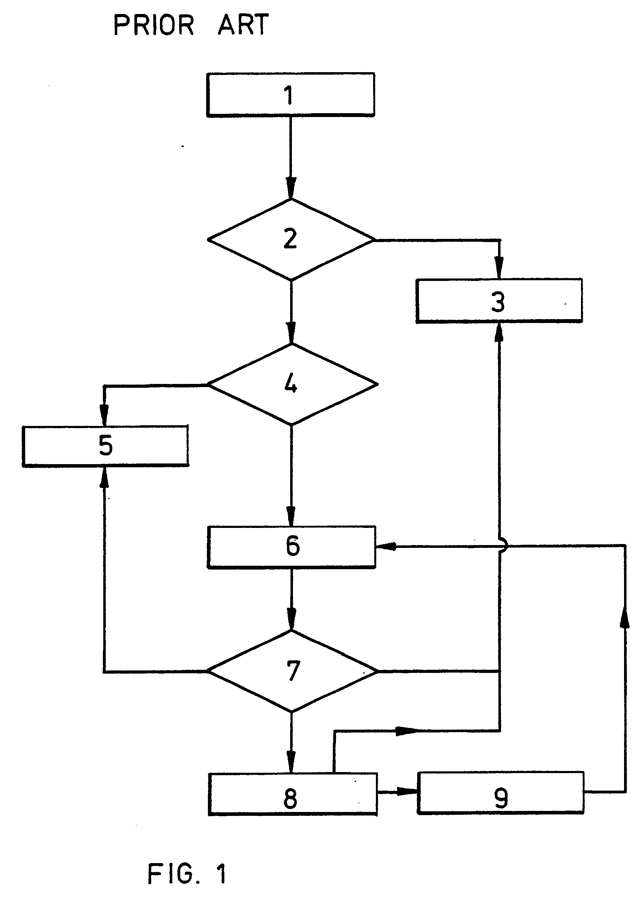

Das bereits eingangs beschriebene Verfahren ist in Figur 1 dargestellt und hier nochmals kurz beschrieben. Die kontaminierten Gegenstände 1 werden dem Verfahren zugeführt. In einem nächsten Schritt 2 wird entschieden, ob die Gegenstände eine für die Freimessung erforderliche Geometrie haben oder nicht. Die nicht freimessbaren Gegenstände werden der radioaktiven Entsorgung 3 zugeführt. Die übrigen Gegenstände werden nun nach den bekannten Vorschriften mittels Sonden gemessen 4. Jene Gegenstände, die unter der Freigrenze liegen, das heisst eine Radioaktivität aufweisen, die unterhalb eines maximal zulässigen Grenzwertes liegt, gelten als Schrott 5 und dürfen der uneingeschränkten Wiederverwendung zugeführt werden. Die über der Freigrenze liegenden Gegenstände werden zum Beispiel zur Dekontamination in ein elektrolytisches Bad 6, in dem sich Phosphorsäure befindet, gelegt und hier elektrolytisch dekontaminiert. Nach der Dekontaminierung werden die Gegenstände nochmals genessen 7. Die nun unterhalb der Freigrenze liegenden Gegenstände werden wiederum als Schrott 5 weiterverwertet und jene überhalb der Freigrenze der radioaktiven Entsorgung 3 zugeführt. Der Elekrolyt 8 ist nun ebenfalls radioaktiv kontaminiert und muss meistens aufwendig entsorgt 3 werden. Mit einem ausserordentlich aufwendigen Verfahren kann jedoch auch eine Regeneration 9 der Phosphorsäure durchgeführt und diese wiederum dem elektrolytischen Bad 6 zugeleitet werden.

Bei diesem Standard-Freimessungsverfahren rechnet man pro Tonne Metall mit zirka 10 bis 100 m² zu messender Oberfläche. Entsprechend der grossen zu messenden Oberfläche sind relativ viele Messgeräte erforderlich, ist die Messzeit beträchtlich lang und müssen eine Vielzahl von verschieden geformten Messonden eingesetzt werden.

Betrachtet man die heute anfallenden Kosten für die Dekontamination bis zur Freigabe, so fallen auf die hierzu erforderlichen Tätigkeiten, die nachfolgenden in Prozenten angegebenen Anteile:

a) Materialcharakterisierungskosten 5 bis 15 %;
hierunter versteht man die Anfertigung einer entsprechenden Dokumentation, die Bestimmung der Qualität der vorliegenden Materialien und den Grad der Kontamination derselben.

b) Demontage- Zerlegungskosten 10 bis 20 %;
dies kann jedoch in einzelnen Fällen erheblich höher sein.

c) Dekontaminationskosten 10 bis 40%;
hierunter fallen die Kosten der erfordlichen Chemikalien, der Dekontaminationsanlage, des Energieaufwandes und die entsprechenden Personalkosten.

d) Die Freimessungskosten 10 bis 50 %;
dieser Posten stellt sich zur Hauptsache aus Personalkosten und Aufwendungen für die Messgeräte und Messonden zusammmen.

e) Freigabekosten 5 bis 15 %;
dies umfasst vorallem die administrativen Aufwendungen für das Erstellen von Rapporten und Ausfüllen von Formularen.

f) Entsorgungskosten inklusive Zwischen- und Endlagerung für sekundäre Abfälle 5 bis 500 %;
je nach der Aktivität des zu entsorgenden Materials schwanken diese Kosten erheblich und sind heute noch kaum erfassbar.

Durch das nachfolgend beschriebene erfindungsgemässe Verfahren werden insbesondere die Kosten für die Punkte c bis f erheblich reduziert.

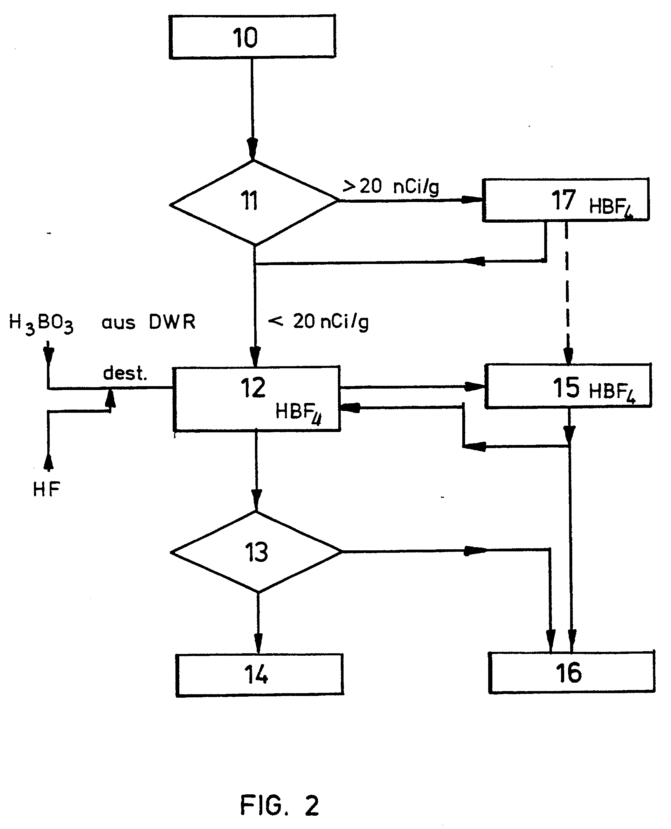

Im erfindungsgemässen Verfahren, wie in Figur 2 schematisch dargestellt, werden sämtliche kontaminierten Gegenstände 10 in einem ersten Schritt einer groben, punktuellen Messung 11 der Strahlenintensität bezüglich der Oberflächenkontamination und der spezifischen Aktivität festgestellt. Die Oberflächenkontamination wird mittels flächigen Kontaktmessonden (Kontamat) gemessen. Für die spezifische Aktivität werden z.B. Bohrproben entnommen, die eine Aussage über die Radioaktivität im Material ergeben. Insbesondere die spezifische Aktivität ist aussagekräftig und lässt auf die Möglichkeit der erfolgreichen Dekontamination unter dem Wert für die Freigabe schliessen . Als Grenzwert gelten in der Schweiz 20 nCi/g.

Im erfindungsgemässen Messverfahren, wie in Figur 2 schematisch dargestellt, werden sämtlichen kontaminierten Gegenstände 10 in einem ersten Schritt einer groben, punktuellen Messung 11 der Strahlenintensität unterzogen. All jene Gegenstände, die unterhalb der vorgenannten Grenze von z.B. 20 nCi/g liegen, werden in einem zweiten Schritt in ein Fluoroborsäurebad 12 getaucht und in diesem vollständig aufgelöst. Nun sind die Gegenstände in einer ersten messbaren Geometrie vorhanden. Die ganze Lösung lässt sich nun rühren und damit homogenisieren, so dass eine Probe hieraus einen representativen Messwert ergibt, der auf die Aktivität der aus der Lösung gewonnenen Materialien schliessen lässt. Die Matrialien aus der Lösung zu entfernen erfolgt mittels den bekannten Methoden. Dies sind entweder die chemische Methode bei spielsweise durch Ausfällung, oder die elektro-chemische Methode durch elektrolytische Ausscheidung der Metalle. Während die erste Methode für alle, das heisst auch zementhaltige Materialien verwendbar ist, kommt die zweite Methode lediglich für metallische Stoffe,wie Fe,Cr,Ni,Cu,Pb usw in Frage .

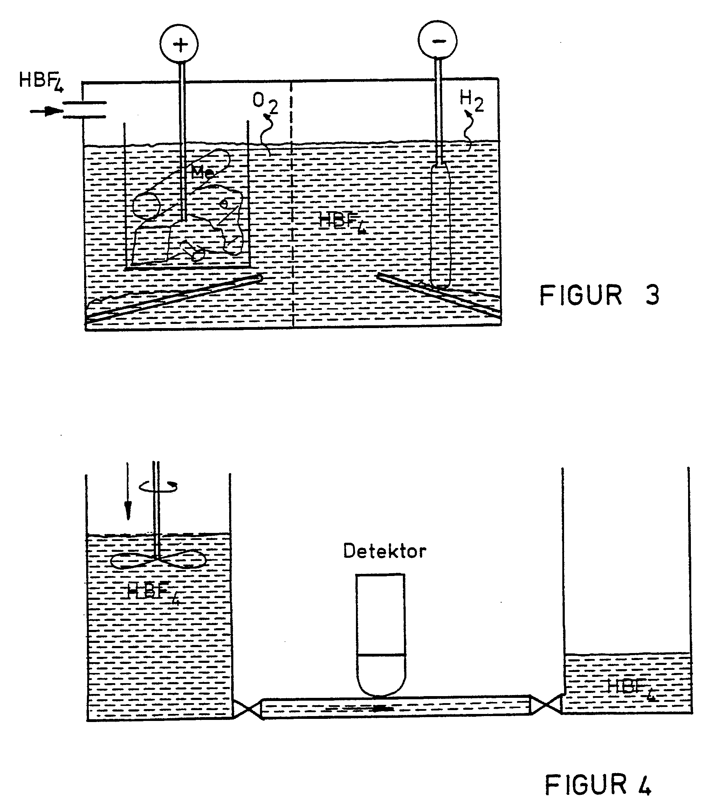

Handelt es sich nur um metallische Gegenstände, so wird man das Fluoroborsäurebad gleichzeitig als elektrolytisches Bad verwenden . Sämtliche kontaminierten, metallischen Gegenstände werden dabei an der Anode mittel oder unmittelbar angelegt (Figur 3 ). Mittelbar kann dies dadurch erfolgen, dass die metallischen Gegenstände in einem Korb mit Graphitboden gelegt werden und der Korb selber an der Anode anliegt. Der Elektrolyt besteht aus einer 10- bis 20prozentigen Fluoroborsäure ($HBF_4$ ). An der anderen Seite des Bades werden Metallplatten in den Elektrolyt gehängt, die als Kathoden dienen. Zwischen Anode und Kathode liegt eine Spannung von 2 bis 4 Volt an. Die Stromdichte beträgt 10 bis 50 mA/cm$^2$. Die extrem hohe Löslichkeit der Metalle in Fluoroborsäure ermöglicht es, die Gegenstände vollständig aufzulösen. Die radioaktiven Stoffe, wie zum Beispiel Cs, Pu, Sr-Isotopen bleiben in Form von Ionen praktisch vollständig in der Lösung. Lediglich das Isotop Co-60 lagert sich mit den anderen Metallen an der Kathode ab. Hierdurch entsteht ein zusätzlicher Dekontaminationseffekt. Die Platten mit den abgelagerten Metall werden von der Kathode entfernt und lassen sich nun mit den üblichen, zugelassen Messmethoden einfach messen. Die vorliegende Geometrie des Metalles erfordert keine besonders geformten Messsonden. Mittels der Messung 13 stellt man nun fest, ob das an den Platten abgelagerte Metall entsprechend der Vorhersage unterhalb der Freigrenze liegt. Trifft dies zu, so gilt dies als zur uneingeschränkten Verwendung in der Industrie verwendbarer Schrott 14, der einer normalen Wiederverwertung zugeführt werden kann. Die als Elektrolyt dienende Fluoroborsäure selber kann im Kreislauf wieder verwendet werden. Die Säure selbst wird bei diesem Verfahren nicht verbraucht. Ist die radioaktive Belastung des Elektrolytes sehr hoch, so kann man diese durch eine Fällung mit $Ca^{2+}$-Ionen, Silicatlösungen oder Oxalsäure regenerieren 15. Die Fällung sedimentiert am Boden des Bades und kann hieraus entfernt werden. Die Radioaktivität beinhaltenden Sedimente werden nachfolgend entsorgt 16, wobei dies dann durch Verfestigung mit Zement oder Bitumen erfolgt.

Materialien, die nach der Durchführung des Verfahrens entgegen den Erwartungen nicht unterhalb des Grenzwertes für die Freimessung liegen, werden als radioaktive Abfälle entsorgt.

Jene oberflächenkontaminierte Gegenstände, die über dem Wert von 20nCi/g Aktivität liegen, werden erst einer Oberflächendekontamination 17 unterworfen. Dies erfolgt hier ebenfalls mit der bereits genannten Fluoroborsäure.

Statt aus der Lösung lediglich eine Probe zu entnehmen und diese zu Messen ist es auch möglich die gesamte, aufgerührte Lösung aus dem Säurebad über eine Leitung in eine Resevoir zu pumpen und dabei an einen Detektor vorbeizuführen, an dem die Dosisleistung gemessen wird (Figur 4). Im Reservoir können die in der Lösung befindlichen Materialien der 10- bis 20prozentigen Fluoroborsäure wiederum auf elektrochemischem oder chemischen Weg ausgesondert werden, wie bereits oben beschrieben.

Zur Bildung des Elektrolytes kann vorteilhaft die bereits radioaktivkontaminierte Borsäure aus Druckwasserreaktoren (DWR) verwendet werden. Der Borsäure braucht lediglich noch Flusssäure hinzugefügt·werden, so dass die gewünschte Fluoroborsäure entsteht. Diese lässt sich zur Dekontamination relativ einfach durchdestillieren. Dies erfolgt vorteilhaft bei Unterdruck.

Vergleicht man die beiden Messmethoden quantitativ, so stellt man fest, dass man bei der Messmethode gemäss dem Stand der Technik für eine Tonne Material ca. 10 bis 100m$^2$ zum Teil schwermessbare Oberflächen gemessen musste, während bei der neuen Methode bei derselben Menge nur noch zirka 2 bis 5 m$^2$ einfach messbare Oberfläche gemessen werden müssen, falls man die Metalle auf elektrolytischem Weg aus der Lösung entzieht, und diese an den Kathodenplatten anliegt. Arbeitet man nach dem chemischen Weg, so ist der Messaufwand noch geringer, weil nur noch Lösungsproben gemessen werden müssen.

Das erfindungsgemässe Messverfahren vermindert somit die Menge der zu entsorgenden Materialien, wodurch primär die sekundären Abfälle sich vermindern, aber auch die Demontage und Zerlegungskosten sind geringer, weil die kontaminierten Gegenstände nicht in messbare Geometrien zerlegt werden müssen. Insbesondere werden aber die Freimessungskosten um ein Vielfaches reduziert.

Zur Erläuterung der Zusammenhänge bezüglich der Aktivität in Feststoffen, sowie deren Aktivität in Lösung und deren Dosisleistung wird auf die beigefügte Tabelle verwiesen. Die hier angegebenen Werte beziehen sich auf das Isotop Co-60. Diese Tabelle soll das Verständnis der Freimessungstechnologie erleichtern. Die Führung der Linie die die noch mögliche Freimessung repräsentiert muss den geltenden jeweiligen nationalen Gesetzgebungen angepasst werden.

Anwendungsgrenze des Freimessungsverfahrens   (dargestellt für Co-60)

| Feststoff Metall z.B. Fe,Ni,Cu Aktivität/g | Menge aktiver Feststoffe in Lösung 20 – 200 g/l Aktivität/liter | Konzentration der Salze in 1 liter Lösung (g) | Dosisstrahlung für Salz – Metall aus 1 liter Lösung R/h |
|---|---|---|---|
| 1 pCi/g | 20 – 200 pCi/l | 60 – 600 | ca. 1 $\mu$R/h |
| 10 pCi/g | 200 – 2000 pCi/l | 60 – 600 | ca. 10 $\mu$R/h |
| 100 pCi/g | 2 – 20 nCi/l | 60 – 600 | ca. 100 $\mu$R/h |
| 1 nCi/g | 20 – 200 nCi/l | 60 – 600 | |
| 10 nCi/g | 200 – 2000 nCi/l | 60 – 600 | |
| 20 nCi/g | 2 – 20 $\mu$Ci/l | 60 – 600 | |
| 100 nCi/g | 0.2 – 2 mCi/l | 60 – 600 | ca. 2mR/h in 1m Abstand |

spez. Aktivität für
Freigrenze (CH)    :
 = 20 nCi/g ($\beta/\gamma$)
 = 20 pCi/g ($\alpha$)

Freigrenze (BRD)
 = 0,37 Bq/g für ($\beta/\gamma$)
 = 0,037 Bq/g für $\alpha$

━━━ = Freimessgrenze

Dossismessung
Freigrenze HSK
 = 10 $\mu$R/h

**Ansprüche**

1. Verfahren zur Freimessung von radioaktiv kontaminierten, metallischen oder zementhaltigen Gegenständen, dadurch gekennzeichnet, dass in einem ersten Schritt eine grobe, punktuelle Messung der Kontamination durchgeführt wird, worauf die im Bereich oder unter den Werten der Freigrenze liegenden Gegenstände in einem zweiten Schritt in ein Fluoroborsäurebad gegeben werden und in diesem aufgelöst und in eine messbare Form umgewandelt werden, dass ferner nach der Umwandlung die Freimessung nach den vorgeschriebenen Methoden erfolgt und die unter dem vorgegebenen Grenzwert der Freimessung liegenden Materialien der uneingeschränkten Wiederverwertung zugeleitet werden.

2. Verfahren nach Anspruch 1, dadurch gekennzeichnet, dass die nach der punktuellen Messung der Strahlenintensität wegen zu hohem Messwerte ausgeschiedenen, kontaminierten Gegenstände, vor der Zuleitung zum zweiten Schritt zuerst oberflächendekontaminiert werden.

3. Verfahren nach Anspruch 1, dadurch gekennzeichnet,dass die im Fluoroborsäurebad aufgelösten Gegenstände durch Rühren in eine homogene verteilte Lösung gebracht werden, die auf die Strahlenaktivität, der aus der Lösung erhältlichen Materialien, schliessen lässt.

4. Verfahren nach Anspruch 1, dadurch gekennzeichnet, dass die im Fluoroborsäurebad in Lösung vorhandenen Materialien in einen zweiten Behälter umgepumpt werden und dabei an einem die Strahlungsintensität feststellenden Detektor vorbei geführt wird, wobei diese Messung auf die Strahlungsaktivität, der aus der Lösung zu gewinnenden Materialien schliessen lässt.

5. Verfahren nach Anspruch 1, dadurch gekennzeichnet, dass die im Fluoroborsäurebad gelösten Materialien chemisch umgewandelt und die umgewandelten Stoffe gemessen werden.

6. Verfahren nach Anspruch 5, dadurch gekennzeichnet, dass die chemische Umwandlung durch Fällung erfolgt und die ausgefällten Materialien gemessen werden.

7. Verfahren nach Anspruch 1, zur Freimessung von radioaktiv kontaminierten, metallischen Gegenständen, dadurch gekennzeichnet, dass die im Fluoroborsäurebad gelösten Stoffe elektrochemisch hierin ausgeschieden und die ausgeschiedenen Materialien gemessen werden.

8. Verfahren nach Anspruch 7, dadurch gekennzeichnet, dass die kontaminierten Gegenstände im Fluoroborsäurebad an einer Anode angeschlossen werden und sich an Kathodenplatten anlagern, die eine messbare Geometrie haben.

9. Verfahren nach Anspruch 1, dadurch gekennzeichnet, dass die im Bad vorhandenen Fluoroborsäure aus kontaminierter Borsäure aus Druckwasserreaktoren, nach Zusetzung von Flusssäure, mittels Destillation gewonnen wird.

10. Verfahren nach Anspruch 2, dadurch gekennzeichnet, dass die im Bad vorhandenen Fluoroborsäure gleichzeitig als Dekontaminationsmittel dient.

11. Verfahren nach Anspruch 10, dadurch gekennzeichnet, dass die kontaminierte Fluoroborsäure durch Beifügung eines Fällungsmittels regeneriert wird, und der dabei anfallende und sedimentierende Schlamm mit adsorbierenden radioaktiven Stoffen mittels Zement und/oder Bitumen für die radioaktive Entsorgung verfestigt werden.

12. Verfahren nach Anspruch 11, dadurch gekennzeichnet, dass als Fällungsmittel vorzugsweise ein Stoff aus der Gruppe: $Ca^{2+}$-Ionen, Silikatlösungen, Oxalsäure und Sulfiden verwendet wird.

PRIOR ART

FIG. 1

FIG. 2

FIGUR 3

FIGUR 4